Europäisches Patentamt

(19) European Patent Office

Office européen des brevets

(11) Publication number: **0 039 594**
**B1**

(12) **EUROPEAN PATENT SPECIFICATION**

(45) Date of publication of patent specification: **11.12.85**

(51) Int. Cl.⁴: **C 23 C 10/48,** B 32 B 15/01, F 01 D 5/28

(21) Application number: **81301932.0**

(22) Date of filing: **01.05.81**

(54) A method of producing a nickel base alloy structure with Ni-Al coating.

(30) Priority: **02.05.80 JP 57854/80**

(43) Date of publication of application:
**11.11.81 Bulletin 81/45**

(45) Publication of the grant of the patent:
**11.12.85 Bulletin 85/50**

(84) Designated Contracting States:
**DE FR IT**

(56) References cited:
**GB-A-1 266 241**
**GB-A-1 274 821**
**GB-A-2 007 572**
**US-A-3 000 755**
**US-A-3 794 511**

(73) Proprietor: **Hitachi, Ltd.**
**5-1, Marunouchi 1-chome**
**Chiyoda-ku Tokyo 100 (JP)**

(72) Inventor: **Chigasaki, Mitsuo**
**6-2-202 Nishinarusawacho-1-chome**
**Hitachi-shi (JP)**
Inventor: **Otaka, Kiyoshi**
**1955-2 Shimana**
**Takahagi-shi (JP)**
Inventor: **Okayama, Akira**
**2720-157 Kanesawacho**
**Hitachi-shi (JP)**
Inventor: **Onisawa, Kenichi**
**20-3 Ayukawacho-6-chome**
**Hitachi-shi (JP)**
Inventor: **Soeno, Ko**
**10-13-2 Takasuzucho-1-chome**
**Hitachi-shi (JP)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

## Description

This invention relates to a method of producing a nickel base alloy structure provided with a nickel-aluminum coating.

Nickel base alloys are often used for forming parts of gas turbines, jet engines, etc., that are exposed to high temperatures. Particularly, the blade and nozzle of a gas turbine are often exposed to a corrosion and oxidation-inducing combustion gas atmosphere containing sulfur, chlorine, vanadium, sodium and lead etc. Thus the nickel alloys are required to have not only high mechanical strength at elevated temperatures but also corrosion and oxidation resistant properties against combustion gas. To impart corrosion and oxidation resistant properties to the nickel alloys, it is necessary to increase the contents of chromium, aluminum and other alloying elements in the alloys. However, an increase in the contents of chromium, aluminum and other alloying elements in excess of acceptable levels would cause a reduction in the ductility of the nickel alloys and other defects, with the result that there are naturally limits to the contents of these alloying elements that could be added to the nickel alloys.

Under these circumstances, it has hitherto been common practice to protect the nickel alloys from combustion gas by applying surface treatment to the alloy, such as the provision of a coating layer on their surfaces. A typical treatment for applying coating on ths nickel alloys is an aluminum coating treatment, in which Al coating is applied by various methods such as the immersion of the alloy in a molten salt, sputtering, vaporization deposition, a CVD process and a pack cementation process. Of these methods, the pack cementation process is most popular. Thus, as described in Japanese Patent Publication No. 3729/1973 (corresopnding to U.S. Serial Number 796,906 of February 5, 1969), includes the steps of embedding a nickel base alloy in a powder mixture of aluminum powder, inert refractory material powder (alumina, for example) and halogenated active agent powder ($NH_4$, Cl, $NH_4F$, NaCl, NaF, $AlCl_3$, etc.) and maintaining the alloy at a predetermined high temperature to cause the aluminum to be diffused into the nickel alloy to form on its surface a coating high in aluminum content. The coating applied to the surface of a nickel base alloy by the pack cementation method is composed of intermetallic compounds, such as $Ni_2Al_3$, NiAl, etc., formed by the combination of aluminum and the nickel in the nickel base alloy that is treated. When the treatment by the pack cementation method is carried out at low temperature below 850°C to specifically increase the corrosion resistant property of the alloy by increasing the amount of chromium in the coating layer, the coating layer becomes composed mainly of $Ni_2Al_3$ which is low in mechanical strength. This makes it necessary to apply heat treatment to the alloy following the pack cementation treatment so as to change the coating to another coating composed mainly of NiAl having increased ductility. After such heat treatment, the coating is composed of a first layer of NiAl rich in aluminium and a second layer of NiAl rich in nickel. The prior art pack cementation method has suffered the disadvantage that, since the heat treatment for changing the composition of the coating has been carried out at high temperature for a prolonged time, the layer of NiAl rich in nickel accounts for the major part of the coating, with the result that the coating provided is not necessarily high in corrosion resistance.

US—A—3000755 describes an "aluminum-nickel" protective coating on a nickel base alloy. The exact metallurgical structure of this layer is not given, but it is described as an "aluminum rich alloy layer". It is formed by heating the turbine blade, after aluminum has been applied, to cause diffusion of the aluminum into nickel.

GB—A—1,274,821 also describes a process of providing a nickel monoaluminide coating by applying an aluminium coating using pack cementation and heat treating the coated alloy in several stages. Details of the monoaluminide layer structure are not given.

This invention has as its object the provision of a method of producing a structure of a nickel base alloy provided with a coating of aluminum-nickel on its surface having both excellent corrosion and thermal shock resistant properties.

The invention is set out in the claims.

In a typical process of the present invention, a structure such as, for example, a blade of a gas turbine or a nozzle of a gas turbine made of a Ni base alloy is subjected to a pack cementation treatment at a predetermined temperature below 850°C to obtain diffusion and penetration of aluminum in the surface layer of the structure, and the structure is then subjected to heat treatment to change the previously formed aluminide layer of $Ni_2Al_3$ to a monoaluminide layer of NiAl to thereby apply a coating of NiAl (nickel monoaluminide) having excellent properties to the nickel base alloy. The heat treatment effected following the pack cementation treatment is carried out so that the value of the parameter $P_o$ is in the range between 50 and 52.5, which parameter varies depending on the temperature T (°K) and time t (hr) of the heat treatment effected after the pack cementation treatment and is given by the following relation

$$P_o = \sum_{i=1}^{n} P_i = \sum_{i=1}^{n} T_i [\log t_i + 20] \times 10^{-3}$$

where $T_i$ and $t_i$ are the temperature and time of the i-th heat treatment respectively, and n is the number of heat treatments effected following the pack cementation treatment. Further, the heat treatment is carried out by holding the structure at a temperature range of 1050—1140°C for a period of one to three hours and then subsequently bolding the structure at a temperature range of 800—880°C for a period of 20 to 30 hours. The heat treatment is such that the thickness ratio of the NiAl layer rich in nickel in the coating becomes in the range between 20 and 40%. If the temperature at which the pack cementation is effected exceeds 850°C, a large amount of Al diffuses into the Ni base alloy, with the result that there is caused in the alloy a phase which makes the alloy brittle.

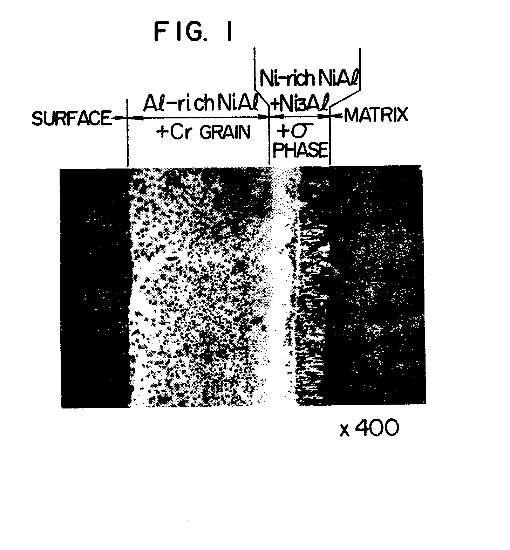

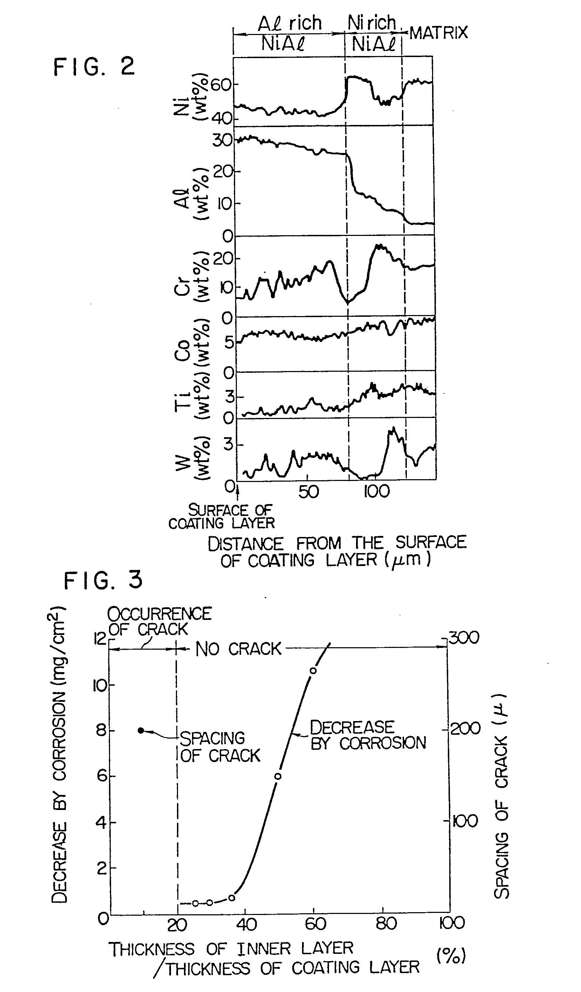

Fig. 1 shows a microstructure of a section of a typical NiAl coating layer produced by the present invention. Fig. 2 shows variations in weight percent of the components constituting the NiAl coating layer when the components are analyzed by use of EPMA (x-ray microanalysis). In the microstructure shown in Fig. 1, the black points in the Al rich NiAl layer shows Cr particles, while the σ phase in the Ni rich NiAl layer is shown by the black columner shapes in contact with the base metal. In the interface between the base metal and the Ni rich NiAl layer there is a $Ni_3Al$ layer several microns in thickness (not shown in Fig. 1). The Ni rich NiAl layer is distinguished from the Al rich NiAl layer by the ratio of the number of nickel atoms to the number of aluminum atoms in the NiAl layer when analyzed by EPMA, that is to say, in the Ni rich NiAl layer the number of Ni atoms is larger than the number of Al atoms (hypostoichiometric). The Al rich NiAl layer is hyperstoichiometric. The interface between the Ni rich NiAl layer and the Al rich NiAl layer is shown by a broken line in Fig. 2, at the vicinity of which interface the content of chromium approaches a minimum while the increase of Ni content and decrease of Al content occur in an area from the interface to the base metal.

From Figs. 1 and 2 it is clear that the NiAl (monoaluminide) coating is principally constituted by Ni and Al and that other components may also be present.

In the present invention, the ratio of the Ni rich NiAl layer thickness to the Al rich NiAl layer thickness is brought within the range of 20 to 40 percent, preferably by adopting the conditions of the heat treatment following a pack cementation treatment in which the value of the parameter $P_0$ is made to be in the range between 50 and 52.5. By virtue of this feature, the NiAl coating provided by the heat treatment can have excellent corrosion and thermal shock resistant properties. When the ratio of the thickness of the NiAl layer rich in nickel in the coating layer exceeds 40%, the corrosion resistance of the structure is greatly reduced. The reason for this seems to be that the corrosion resistance of the NiAl layer rich in nickel is lower than that of the NiAl layer rich in aluminum located outside the NiAl layer rich in nickel. Conversely when the thickness ratio of the NiAl layer rich in nickel is less than 20%, the thermal impact resistance of the alloy is lessened. The reason for this seems to be that in the NiAl coating layer there is a larger amount of the Al rich NiAl which is relatively low in ductility and that a $Ni_2Al_3$ layer formed by the pack cementation treatment partly remains without changing to the NiAl layer in spite of the heat treatment. Preferably the ratio of the NiAl layer rich in nickel is in the range between 25 and 35%, more preferably in the range between 28 and 32%. The thickness of the NiAl coating layer is preferably in the range of 50 to 160 microns.

In Fig. 3 there is shown the relationship between the variation in the proportion of the Ni rich NiAl coating layer and the corrosion and thermal shock resisting properties. This shows that the amount of corrosion increases very much if the thickness of the Ni rich NiAl layer exceeds 40 percent, while cracks occur if this thickness is less than 20 percent.

The blade of a gas turbine is preferably of a casting consisting of, by weight, 0.1 to 0.25% C, 10 to 20% Cr, 5 to 13% Co, 1 to 3% Mo, 1 to 5% W, 0.4 to 1.5% Nb, 2 to 5% Ti, 2 to 5% Al, 0.005 to 0.1% B, 0.05 to 0.3% Zr, 1 to 3% Ta and the balance Ni and inevitable impurities. The nozzle of a gas turbine is preferably a casting consisting of, by weight, 0.1 to 0.2% C, 20 to 25% Cr, 16 to 22% Co, 1.5 to 2.5% W, 0.5 to 1.5% Nb, 1 to 2% Ta, 3 to 4.5% Ti, 1 to 3% Al, 0.05 to 0.15% Zr, 0.005 to 0.015% B, and the balance Ni.

Examples of the invention will now be described. It is to be understood that the invention is not limited to these specific examples.

Example 1

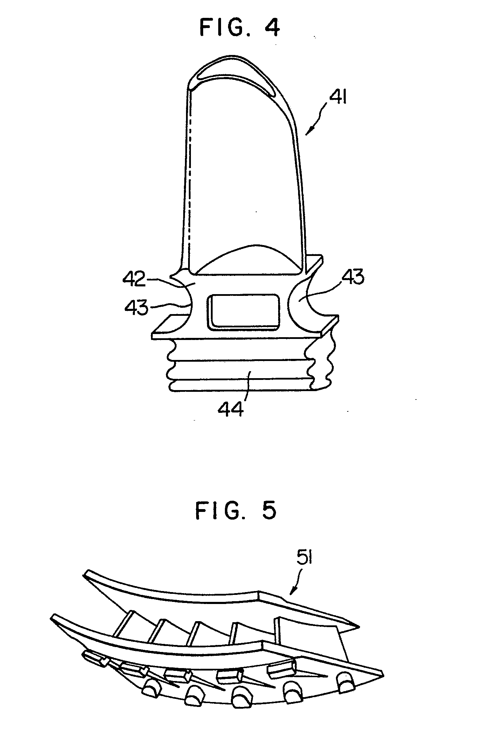

A coating layer of the present invention was applied to a gas turbine blade 41 shown in Fig. 4 which is made of Ni base alloy of IN-738LC having the following components:

| | | | |
|----|---------|----|---------|
| C  | 0.17 wt% | Nb | 0.9 wt% |
| Cr | 16.1    | Ti | 3.3     |
| Ni | Balance | Al | 3.4     |
| Co | 8.6     | B  | 0.01    |
| Mo | 1.8     | Zr | 0.09    |
| W  | 2.5     | Ta | 1.7     |

First, a portion of the gas turbine blade 41 defined between the terminal end thereof and the center 43 of a shank 42 was embedded in a powder mixture for the pack cementation process and then was maintained at 750°C for 4 hours in an argon gas atmosphere, whereby a $Ni_2Al_3$ layer was formed on the surface of this portion of the gas turbine blade 41. The powder mixture consisted of Al powder (25%), $NH_4Cl$ powder (1.5%) and $Al_2O_3$ powder (73.5%). Since coating treatment is not necessary for the other portion of the turbine blade 41 defined between the center 43 of the shank 42 and a dovetail, this other portion was embedded in $Al_2O_3$ powder of 100%. After applying the $Ni_2Al_3$ layer on the gas turbine blade 41 by the pack cementation process, there was effected a heat treatment of 2 hours at 1120°C and then another heat treatment of 24 hours at 843°C to thereby change the $Ni_2Al_3$ layer of an NiAl coating layer having a thickness of 120 microns in which the thickness proportion of the Ni rich NiAl layer was 30 percent (as shown in a test piece No. 2 in Table 1). After the same pack cementation treatment was applied to other gas turbine blades, the heat treatments shown in Table 1 were applied to change the $Ni_2Al_3$ layer into an NiAl layer having various proportions of the Ni rich NiAl layer, while the heat treatment parameter $P_0$ was calculated for each heat treatment.

Then, the gas turbine blades having the NiAl coating layer were assembled into an actual gas turbine, which was operated for about 10,000 hours using light oil including 0.3% sulfur as a fuel so as to test the gas turbine blades as to whether high temperature corrosion and/or crack occurs. The temperature of the surface of the gas turbine blade during this operation is about 800°C. As a result, there was observed no occurrence of high temperature corrosion nor the occurrence of any crack in respect of the gas turbine blade test pieces Nos. 1, 2 and 3 shown in Table 1. However, the cracking was observed in the test piece No. 4, while high temperature corrosion was observed in test pieces Nos. 5 and 6.

For testing in detail the corrosion and thermal shock resisting properties of the gas turbine blade provided on the surface thereof with the NiAl coating layer, other experiments were effected on the gas turbine blade Nos. 1 to 5 in Table 1.

To test corrosion resistance, the test pieces were immersed in a molten salt bath consisting of 25% NaCl+75% $Na_2SO_4$ and maintained at 850°C for 120 hours in an electric furnace, and then subjected to descaling by boiling them in an aqueous solution of 18% NaOH+3% $KMnO_4$ and then in an aqueous solution of 10% ammonium citrate. Following the treatment, corrosion losses were determined to assess the corrosion resistance of the test pieces. Table 1 shows the corrosion losses determined by the test. It will be seen that the corrosion losses of specimens No. 1—3 obtained by the method according to the invention, in which the heat treatment parameter $P_0$ has a value in the range between 50.7 and 52.4 and the thickness ratio of the nickel rich NiAl layer in the NiAl coating to the whole covering layer is in the range between 23 and 38%, were in the range between 0.43 and 0.7 mg/cm². In contrast, the corrosion losses of test pieces Nos. 5 and 6 prepared for comparison having the parameter $P_0$ value of 53.2 and 80.3 respectively and the thickness ratios of nickel rich NiAl layer of 50% and 60% respectively relate to the whole coating layer were 6.0 mg/cm² and 10.7 mg/cm² respectively. It is apparent that the test pieces Nos. 1—3 obtained in accordance with the present invention have excellent corrosion resistance.

The specimens Nos. 1—3 obtained by the method embodying the present invention were further tested regarding thermal impact resistance. For comparison, the test piece No. 4 having the heat treatment parameter $P_0$ of 49.7 and 16% thickness ratio of the nickel rich NiAl layer relative to the whole NiAl layer was also tested for thermal impact resistance. In the thermal impact resistance test, the test pieces were subjected to heating and water cooling three times between room temperature and 800°C, each cycle of this repetition lasting for six minutes. After the test, cracks formed on the aluminum coating were observed with an optical microscope. The results show that no crack formation was observed on the surfaces of the test pieces Nos. 1—3 while formation of cracks of a mean spacing of 200 microns was observed on the surface of the test piece No. 4.

Example 2

A NiAl coating layer formed in accordance with the heat treatment conditions shown in the test pieces Nos. 2 and 5 in Table 1 is applied on the whole surface of a gas turbine nozzle 51 shown in Fig. 5, which gas turbine nozzle is made of a Ni base alloy having the following components:

| C | 0.15 wt% | Ta | 1.4 wt% |
|----|----------|----|---------|
| Cr | 22.5 | Ti | 3.7 |
| Ni | Balance | Al | 1.9 |
| Co | 19.0 | Zr | 0.1 |
| W | 2.0 | B | 0.01 |
| Nb | 1.0 | | |

Then, the gas turbine nozzle was assembled into an actual gas turbine, which was operated about 10,000 hours using light oil including 0.3% sulfur as a fuel so as to test the gas turbine nozzle as to whether or not high temperature corrosion and/or crack occurs. As a result, in a nozzle having a NiAl coating layer formed in accordance with the heat treatment corresponding to that of the test piece 2 shown in Table 1 there was observed no high temperature corrosion nor crack. However, in another nozzle having another NiAl coating layer formed in accordance with the heat treatment corresponding to that of the test piece No. 5 shown in Table 1 there was observed the occurrence of high temperature corrosion.

Thus, in the present invention, it becomes possible to obtain a structure provided on the surface thereof with a NiAl coating layer having both of excellent corrosion resistance and excellent thermal resistivity, which structure is made of a Ni base alloy.

TABLE 1

| Number of test piece | Condition of pack cementation treatment | Condition of heat treatment after pack cementation treatment | Heat treatment parameter Po | Thickness of NiAl coating layer | Thickness ratio of Ni rich NiAl to the whole coating layer | Amount of decrease by corrosion | Thermal shock resistivity |
|---|---|---|---|---|---|---|---|
| 1 | 750°C 4 hrs | 1050°C, 2 hrs →843°C, 24 hrs | 50.7 | About 120 microns | 23% | 0.43 mg/cm$^2$ | no crack |
| 2 | 750°C 4 hrs | 1120°C, 2 hrs →843°C, 24 hrs | 52.1 | " | 30 | 0.5 | no crack |
| 3 | 760°C 3 hrs | 1120°C, 3 hrs →843°C, 24 hrs | 52.4 | " | 38 | 0.7 | no crack |
| 4 | 750°C 5 hrs | 1000°C, 2 hrs →843°C, 24 hrs | 49.7 | " | 16 | — | Occurrence of Crack with Mean Spacing of about 200 μ |
| 5 | 750°C 2 hrs | 1150°C, 4 hrs →843°C, 24 hrs | 53.2 | " | 50 | 6.0 | — |
| 6 | 750°C 2 hrs | 1080°C, 6 hrs →1120°C, 2 hrs →843°C, 24 hrs | 80.3 | " | 60 | 0.7 | — |

## Claims

1. A method of producing a structure having a main body made of a Ni base alloy and a surface layer comprising a NiAl coating comprising the steps of:

forming an aluminide layer of $Ni_2Al_3$ on the surface of said main body by the diffusion and penetration of aluminum at a temperature below 850°C, and

subjecting the aluminide layer to heat treatment to change the aluminide layer to an monoaluminide layer of NiAl having a nickel rich NiAl layer, whose thickness relative to the whole monoaluminide layer is in the range between 20 and 40% by selecting the conditions of the heat treatment so that the value $P_o$ given by

$$P_o = \sum_{i=1}^{n} T_i[\log\ t_i + 20] \times 10^{-3}$$

(where $T_i$(°K) is the temperature of the i-th heat treatment $t_i$(hr) is the duration of the i-th heat treatment, and n is the number of heat treatments) is in the range between 50 and 52.5, the heat treatment being carried out by holding the structure at a temperature range of 1050—1140°C for a period of one to three hours and then subsequently holding the structure at a temperature range of 800—880°C for a period of 20 to 30 hours.

2. A method as claimed in claim 1 wherein the said diffusion and penetration of aluminum in the surface of the main body are achieved by embedding the main body in an aluminum pack material composed of 10—40 wt% of aluminum powder, 0.1—5 wt% of halogenated active material powder and the balance inert refractory material powder and holding the nickel alloy at a predetermined temperature.

3. A method of producing a gas turbine blade having a blade portion, a shank portion and a dovetail portion which blade is of a casting made of a Ni base alloy and is provided on the surface of a part thereof with a surface layer comprising a NiAl coating, comprising the steps of:

embedding a part of the blade, which part is defined between the center of the shank portion of the blade and the terminal end of the blade portion thereof, into an aluminum pack cementation material composed of 10—40 wt% of aluminum powder, 0.1—5 wt% of halogenated active material powder and the balance inert refractory material powder, while embedding another part of the blade defined between the center of the shank portion and the end of the dovetail portion into another material composed of inert refractory material powder,

maintaining said embedded blade at a predetermined temperature below 850° to form an aluminide layer of $Ni_2Al_3$ on the surface of the part of the blade,

subjecting the aluminide layer to a heat treatment at a temperature of 1050—1140°C for a period of 1—3 hours and then to another heat treatment at a temperature of 800—880°C for a period of 20—30 hours to change the aluminide layer to a monoaluminide layer of NiAl having a thickness of 50—160 microns while causing the thickness of a nickel rich NiAl layer relative to the whole monoaluminide layer to be in a range between 20 and 40%, by selecting the conditions of the heat treatment so that value of $P_o$ given by

$$P_o = \sum_{i=1}^{n} T_i[\log\ t_i + 20] \times 10^{-3}$$

(where $T_i$(°K) is the temperature of the i-th heat treatment, $t_i$(hr) the duration of the i-th heat treatment and n the number of heat treatments) is in the range between 50 and 52.5, said Ni base alloy consisting of by weight 0.1—0.25% C, 10—20% Cr, 5—13% Co, 1—3% Mo, 1—5% W, 0.4—1.5% Nb, 2—5% Ti, 2—5% Al, 0.005—0.1% B, 0.05—0.3% Zr, 1—3% Ta and the balance Ni and inevitable impurities.

4. A method of producing a gas turbine nozzle which is of a casting made of a Ni base alloy, said nozzle being provided on the surface thereof with a surface layer comprising a NiAl coating, comprising the steps of:

embedding the nozzle into an aluminum pack cementation material composed of 10—40 wt% of aluminum powder, 0.1—5 wt% of halogenated active material powder and the balance inert refractory material powder,

maintaining said embedded nozzle at a predetermined temperature below 850° to form an aluminide layer of $Ni_2Al_3$ on the surface of the nozzle,

subjecting the aluminide layer to a heat treatment at a temperature of 1050—1140°C for a period of 1—3 hours and then to another heat treatment at a temperature of 800—880°C for a period of 20—30 hours to change the aluminide layer to a monoaluminide layer of NiAl having a thickness of 50—160 microns while causing the thickness of a nickel rich NiAl layer relative to the whole monoaluminide layer to be in a range between 20 and 40%, by selecting the conditions of the heat treatment so that the value of $P_o$ given by

$$P_o = \sum_{i=1}^{n} T_i\ [\log\ t_i + 20] \times 10^{-3}$$

(where $T_i$(°K) is the temperature of the i-th heat treatment, $t_i$(hr) the duration of the i-th heat treatment and n the number of heat treatments) is in the range between 50 and 52.5,

said Ni base alloy consisting of by weight 0.1—0.2% C, 20—25% Cr, 16—22% Co, 1.5—2.5% W, 0.5—1.5% Nb, 1—2% Ta, 3—4.5% Ti, 1—3% Al, 0.05—0.15 Zr, 0.005—0.015 B and the balance Ni.

**Patentansprüche**

1. Verfahren zur Herstellung einer Struktur mit einem Hauptkörper, der aus einer Legierung auf Nickelbasis besteht und aus einer Oberflächenschicht, die eine NiAl-Überzugsschicht aufweist, mit folgenden Verfahrensschritten:

Ausbilden einer Aluminid-Schicht aus $Ni_2Al_3$ auf der Oberfläche des Hauptkörpers durch Diffusion und durch Eindrigen von Aluminium bei einer Temperatur unterhalb von 850°C, und

Unterwerfen der Aluminid-Schicht einer Wärmebehandlung, um die Aluminid-Schicht in eine Mono-Aluminid-Schicht aus NiAl zu verwandeln, welche eine nickelreiche NiAl-Schicht besitzt, deren Dicke relativ zu der gesamten Mono-Aluminid-Schicht im Bereich zwischen 20 und 40% liegt, indem die Bedingungen der Wärmebehandlung so gewählt werden, daß der Wert $P_o$, der durch

$$P_o = \sum_{i=1}^{n} T_i \, [\log \, t_i + 20] \times 10^{-3}$$

gegeben ist (wobei $T_i$(°K) die Temperatur der i-ten Wärmebehandlung, $t_i$(hr) die Dauer der i-ten Wärmebehandlung und n die Anzahl der Wärmebehandlungen ist), im Bereich zwischen 50 und 52,5 liegt, wobei die Wärmebehandlung durchgeführt wird, indem die Struktur in einem Temperaturbereich von 1050 bis 1140°C für eine Dauer vof ein bis drei Stunden gehalten wird und dann darauffolgend die Struktur in einem Temperaturbereich von 800 bis 880°C für eine Dauer von 20 bis 30 Stunden gehalten wird.

2. Verfahren nach Anspruch 1, bei dem die Diffusion und das Eindrigen von Aluminium in die Oberfläche des Hauptkörpers erreicht wird, indem der Hauptkörper in ein Aluminium-Packmaterial eingebettet wird, welches aus Aluminiumpulver mit 10 bis 40 Gew.-%, einem Pulver aus halogeniertem aktiven Material mit 0,1 bis 5 Gew.-% und als Rest aus einem Pulver aus schwer-schmelzendem inerten Material besteht, und die Nickellegierung bei einer vorgegebenen Temperatur gehalten wird.

3. Verfahren zur Herstellung einer Gasturbinenschaufel mit einem Schaufelteil, einem Schaftteil und einem Schwalbenschwanzteil, wobei die Schaufel ein aus einer Legierung auf Nickelbasis hergestelltes Gußteil ist und teilweise an der Oberfläche mit einer Oberflächenschicht versehen ist, die eine NiAl-Überzugsschicht enthält, mit folgenden Verfahrensschritten:

Einbetten des Teiles der Schaufel, der durch das Zentrum des Schaftteils der Schaufel und das Abschlußende ihres Schaufelteiles abgegrenzt ist, un ein Aluminiumpack-Zementierungsmaterial, das aus Aluminiumpulver mit 10 bis 40 Gew.-%, Pulver aus halogeniertem, aktiven Material mit 0,1 bis 5 Gew.-% und als Rest aus Pulver eines inerten schwer-schmelzenden Materials besteht, wobei ein anderer Teil der Schaufel, der durch das Zentrum des Schaftteiles und das Ende des Schwalbenschwanzteiles abgegrenzt ist, in ein anderes Material eingebettet wird, das aus Pulver aus schwer-schmelzendem inerten Material besteht,

Halten der eingebetteten Schaufel auf einer vorgegebenen Temperatur unter 850°C zum Bilden einer Aluminid-Schicht aus $Ni_2Al_3$ auf der Oberfläche des Teiles der Schaufel,

Durchführen einer Wärmebehandlung der Aluminid-Schicht bei einer Temperatur von 1050 bis 1140°C für eine Dauer von ein bis drei Stunden und anschließendes Durchführen einer weiteren Wärmebehandlung bei einer Temperatur von 800 bis 880°C für eine Dauer von 20 bis 30 Stunden, um die Aluminid-Schicht in eine Mono-Aluminid-Schicht aus NiAl mit einer Dicke von 50 bis 160 $\mu$ zu verwandeln, wobei die Dicke einer nickelreichen NiAl-Schicht im Verhältnis zu der gesamten Mono-Aluminid-Schicht in den Bereich zwischen 20 und 40% gelegt wird, indem die Bedingungen der Wärmebehandlung so ausgewählt werden, daß der Wert von $P_o$, der durch

$$P_o = \sum_{i=1}^{n} T_i \, [\log \, t_i + 20] \times 10^{-3}$$

gegeben ist (wobei $T_i$(°K) die Temperatur der i-ten Wärmebehandlung, $t_i$(hr) die Dauer der i-ten und n die Anzahl der Wärmebehandlungen ist), in dem Bereich zwischen 50 und 52,5 liegt,

wobei die Legierung auf Nickelbasis in Gewichtsprozenten 0,1 bis 0,25% C, 10 bis 20% Cr, 5 bis 13% Co, 1 bis 3% Mo, 1 bis 5% W, 0,4 bis 1,5% Nb, 2 bis 5% Ti, 2 bis 5% Al, 0,005 bis 0,1% B, 0,05 bis 0,3% Zr, 1 bis 3% Ta und als Rest Ni und unvermeidliche Verunreinigungen enthält.

4. Verfahren zur Herstellung einer Gasturbinendüse, die ein Gußteil aus einer Legierung auf Nickelbasis ist, wobei die Düse an ihrer Oberfläche mit einer Oberflächenschicht versehen ist, die eine NiAl-Überzugsschicht besitzt, mit folgenden Verfahrensschritten:

Einbetten der Düse in ein Aluminiumpack-Zementierungsmaterial, das aus 10 bis 40 Gew.-% Aluminiumpulver, 0,1 bis 5 Gew.-% Pulver aus halogeniertem aktiven Material und als Rest aus Pulver aus inertem schwer-schmelzenden Material besteht,

Halten der eingebetteten Düse auf einer vorgegebenen Temperatur unterhalb von 850°, um eine Aluminid-Schicht aus $Ni_2Al_3$ auf der Oberfläche der Düse auszubilden,

Durchführen einer Wärmebehandlung für die Aluminid-Schicht bei einer Temperatur von 1050 bis 1140°C für eine Dauer von ein bis drei Stunden und anschließendes Durchführen einer weiteren Wärmebehandlung bei einer Temperatur von 800 bis 880°C für eine Dauer von 20 bis 30 Stunden, um die Aluminid-Schicht in eine Mono-Aluminid-Schicht aus NiAl mit einer Dicke von 50 bis 160 $\mu$ zu verwandeln, wobei die Dicke einer nickelreichen NiAl-Schicht bezüglich der gesamten Mono-Aluminid-Schicht in den Bereich zwischen 20 und 40% gelegt wird, indem die Bedingungen der Wärmebehandlung so gewählt werden, daß der Wert von $P_o$, der durch

$$P_o = \sum_{i=I}^{n} T_i \, [\log \, t_i + 20] \times 10^{-3}$$

gegeben ist (wobei $T_i(°K)$ die Temperatur der i-ten Wärmebehandlung, $t_i(hr)$ die Dauer der i-ten Wärmebehandlung und n die Anzahl der Wärmebehandlungen ist), in dem Bereich zwischen 50 und 52,5 liegt, und wobei die Legierung auf Nickelbasis in Gewichtsprozenten aus 0,1 bis 0,2% C, 20 bis 25% Cr, 16 bis 22% Co, 1,5 bis 2,5% W, 0,5 bis 1,5% Nb, 1 bis 2% Ta, 3 bis 4,5% Ti, 1 bis 3% Al, 0,05 bis 0,15% Zr, 0,005 bis 0,015% B und als Rest aus Ni besteht.

**Revendications**

1. Procédé de fabrication d'une structure comportant un corps principal constitué par un alliage à base de Ni et une couche superficielle comportant un revêtement de NiAl, incluant les phases opératoires consistant à:

— former une couche d'aluminiure en $Ni_2Al_3$ à la surface dudit corps principal au moyen de la diffusion et de la pénétration de l'aluminium à une température inférieure à 850°C, et
— soumettre la couche d'aluminiure à un traitement thermique de manière à transformer la couche d'aluminiure en une couche de monoaluminiure de NiAl incluant une couche en NiAl riche en nickel et dont l'épaisseur se situe, par rapport à l'ensemble de la couche de monoaluminiure, dans la gamme comprise entre 20 et 40%, moyennant le choix des conditions du traitement thermique de telle manière que la valeur $P_o$ fournie par

$$P_o = \sum_{i=I}^{n} T_i \, (\log \, t_i + 20) \times 10^{-3}$$

(où $T_i$ (°K) est la température du i-ème traitement thermique, $t_i$ (h) est la durée du i-ème traitement thermique et n est le nombre des traitements thermiques) se situe dans la gamme comprise entre 50 et 52,5, le traitement thermique étant effectué en élevant la température dans une plage de températures de 1050—1140°C pendant un intervalle de temps d'une à trois heures, et en maintenant ultérieurement la structure dans une plage de température de 800—880°C pendant un intervalle de temps de 20 à 30 heures.

2. Procédé selon la revendication 1, selon lequel on réalise la diffusion et la pénétration d'aluminium dans la surface du corps principal, en enrobant ce corps dans un matériau sous forme d'aluminium pulvérulent constitué par 10—40% en poids de poudre d'aluminium, 0,1—5% en poids d'une poudre d'une substance active halogénée, le reste étant constitué par une poudre d'un matériau réfractaire inerte, et en maintenant la couche de nickel à une température prédéterminée.

3. Procédé de fabrication d'une turbine à gaz comportant une partie formant aube, une partie formant pied et une partie en queue d'aronde, laquelle aube est constituée par une pièce coulée formée par un alliage à base de Ni et comporte, à la surface de l'un de ses éléments, une couche superficielle incluant un revêtement de NiAl, incluant les phases opératoires consistant à

— enrober une partie de l'aube, laquelle partie est définie entre le centre de la partie formant pied de l'aube et l'extrémité de la partie formant aube, dans un matériau à base d'aluminium de cémentation en milieu pulvérulent constitué par 10—40% en poids de poudre d'aluminium, 0,1—5% d'une poudre d'un matériau actif halogéné, le reste étant constitué par une poudre de matériau réfractaire inerte, tout en insérant une autre partie de l'aube, définie entre le centre de la partie formant pied et l'extrémité de la partie en queue d'aronde, dans un autre matériau constitué par une poudre d'un matériau réfractaire inerte,
— maintenir ladite aube enrobée, à une température prédéterminée à 850°C de manière à former une couche d'aluminiure en $Ni_2Al_3$ à la surface de la partie de l'aube,
— soumettre la couche d'aluminiure à un traitement thermique à une température de 1050—1140°C pendant un intervalle de temps de 1—3 heures, puis un autre traitement thermique à une température de 800—880°C pendant un intervalle de temps de 20—30 heures afin de transformer la couche d'aluminiure en une couche de monoaluminiure de NiAl possédant une épaisseur de 50—160 microns, tout en réglant le rapport de l'épaisseur d'une couche de NiAl riche en nickel par rapport à l'ensemble de la couche de monoaluminiure, dans une gamme située entre 20 et 40%, en choisissant les conditions du traitement thermique de telle sorte que la valeur de $P_o$ fournie par

$$P_o = \sum_{i+I}^{n} Ti \, (\log \, t_i + 20) \times 10^{-3}$$

$T_i$ (°K) est la température du i-ème traitement thermique, $t_i$ (h) est la durée du i-ème traitement thermique et n est le nombre des traitements thermiques) se situe dans la gamme comprise entre 50 et 52,5,
— ledit alliage à base de Ni étant constitué par 0,1—0,25% en poids de C, 10—20% en poids de Cr, 5—13% en poids de Co, 1—3% en poids de Mo, 1—5% en poids de W, 0,4—1,5% en poids de Nb, 2—5% en poids de Ti, 2—5% en poids de Al, 0,005—0,1% en poids de B, 0,05—0,3% en poids de Zr, 1—3% en poids de Ta, le reste étant constitué par du Ni et par des impuretés inévitables.

4. Procédé de fabrication d'une tuyère de turbine à gaz, qui est constituée par une pièce coulée formée par un alliage à base de Ni, ladite tuyère comportant, sur l'une de ses surfaces, une couche superficielle incluant un revêtement en NiAl, incluant les phases opératoires consistant à:

— envelopper la tuyère dans un matériau à base d'aluminium de cémentation en milieu pulvérulent incluant 10—40% en poids de poudre d'aluminium, 0,1—5% en poids d'une poudre d'un matériau actif halogéné, le restant étant constitué par une poudre d'un matériau réfractaire inerte,
— maintenir ladite tuyère enrobée, à une température prédéterminée inférieure à 850° de manière à former une couche d'aluminiure de $Ni_2Al_3$ à la surface de la tuyère,
— soumettre la couche d'aluminiure à un traitement thermique à une température comprise entre 1050—1100°C pendant un intervalle de temps de 1—3 heures, puis à un autre traitement thermique à une température de 800—880°C pendant un intervalle de temps de 20—30 heures de manière à transformer la couche d'aluminiure en une couche de mono-

aluminiure en NiAl possédant une épaisseur de 50—160 microns, tout en réglant le rapport de l'épaisseur de la couche de NiAl riche en nickel par rapport à l'ensemble de la couche de monoaluminiure, dans une gamme située entre 20 et 40%, en choisissant les conditions du traitement thermique de manière que la valeur de $P_o$ fournie par

$$P_o = \sum_{i=1}^{n} Ti \ (\log \ t_i + 20) \times 10^{-3}$$

(où $T_i$ (°K) est la température du i-ème traitement thermique, $T_i$ (h) est la durée du i-ème traitement thermique et e est le nombre des traitements thermiques) se situe dans la gamme comprise entre 50 et 52,5,
— ledit alliage à base de Ni étant constitué par 0,1—0,2% en poids de C, 20—25% en poids de Cr, 16—22% en poids de Co, 1,5—2,5% en poids de W, 0,5—1,5% en poids de Nb, 1—2% en poids de Ta, 3—4,5% en poids de Ti, 1—3% en poids de Al, 0,05—0,15% en poids de Zr, 0,05—0,015% en poids de B, le reste étant constitué par du Ni.

# F IG. I

SURFACE — | Aℓ−rich NiAℓ | Ni−rich NiAℓ +Ni3Aℓ | — MATRIX
+Cr GRAIN | +σ PHASE

x 400

**F I G. 2**

Aℓ rich NiAℓ | Ni rich NiAℓ | MATRIX

DISTANCE FROM THE SURFACE
OF COATING LAYER (μm)

SURFACE OF
COATING LAYER

**F I G. 3**

THICKNESS OF INNER LAYER
/THICKNESS OF COATING LAYER (%)

2

FIG. 4

41

42

43

43

44

FIG. 5

51